# EUROPÄISCHE PATENTSCHRIFT

(11) **EP 3 300 925 B1**
(45) Veröffentlichungstag und Bekanntmachung des Hinweises auf die Patenterteilung: **20.11.2019**
(21) Anmeldenummer: 17178550.4
(22) Anmeldetag: 29.06.2017
(51) Int. Cl.: B60C 11/03, B60C 11/13

(54) **FAHRZEUGLUFTREIFEN**
PNEUMATIC TYRES FOR A VEHICLE
PNEUMATIQUES DE VÉHICULE

(30) Priorität: 30.09.2016 DE 102016218981
(43) Veröffentlichungstag der Anmeldung: 04.04.2018
(73) Patentinhaber: Continental Reifen Deutschland GmbH, 30165 Hannover (DE)
(72) Erfinder: Robelo, Marco, 30159 Hannover (DE); Pagac, Lubomir, 020 01 Puchov (SK)
(74) Vertreter: Finger, Karsten

(56) Entgegenhaltungen:
- EP-A1- 2 233 321
- DE-A1-102004 042 223
- JP-A- H07 276 924
- JP-A- 2000 142 033

## Beschreibung

Die Erfindung betrifft einen Fahrzeugluftreifen mit einem profilierten Laufstreifen, welcher durch eine auf maximale Profiltiefe ausgeführte, zentrale Umfangsnut und durch zwei ebenfalls auf maximale Profiltiefe ausgeführte schulterseitige Umfangsnuten in zwei Schulterblockreihen und zwei mittlere Blockreihen gegliedert ist, wobei die Schulterblockreihen in Blöcke gegliedert sind, wobei in Umfangsrichtung aufeinanderfolgende Blöcke durch zwei in Umfangsrichtung voneinander beabstandete Quernuten und eine diese verbindende sich etwa mittig in der Blockreihe in Umfangsrichtung erstreckende Zusatznut voneinander getrennt sind, wobei jeweils die eine Quernut in die schulterseitige Umfangsnut mündet und die andere von der Zusatznut ausgehend sich über den Laufstreifenrand hinaus erstreckt, wobei die Zusatznuten jeweils am blockreiheninnenseitigen Ende der in die schulterseitige Umfangsnut mündenden Quernuten anschließen und wobei an den blockreiheninnenseitigen Endabschnitten dieser Quernuten jeweils eine Grundanhebung ausgebildet ist, welche ein Tiefe aufweist, die der Tiefe der Zusatznuten entspricht.

Ein Fahrzeugluftreifen der eingangs genannten Art, welcher insbesondere ein Reifen für Vans oder Light-Trucks ist, ist beispielsweise aus der EP 2 233 321 A1 bekannt. Dieser Reifen weist einen Laufstreifen mit Schulterblockreihen auf, in welchen in Umfangsrichtung aufeinanderfolgende Blöcke durch zwei in Umfangsrichtung voneinander beabstandete Quernuten und eine diese verbindende Zusatznut voneinander getrennt sind. Die Zusatznut läuft dabei über den gesamten Reifenumfang, ist daher eine in Umfangsrichtung umlaufende Nut, und verläuft in Draufsicht ferner zick-zack-förmig. Jene Quernuten, welche in die schulterseitige Umfangsnut münden, schließen an den laufstreifenaußenseitigen Knickstellen der Zick-Zack-Form der Zusatznuten an und jene Quernuten, welche sich über den Laufstreifenrand hinauserstrecken, schließen an den laufstreifeninnenseitigen Knickstellen der Zick-Zack-Form der Zusatznuten an. Dieser Reifen soll gute Fahreigenschaften unter winterlichen Fahrbedingungen sowie gute Trockenhandlingeigenschaften aufweisen.

Aus der DE 10 2014 213 660 A1 ist ein PKW-Reifen mit einem Laufstreifen mit Umfangsrichtung voneinander beabstandeten Quernuten bekannt, die durch eine sich in Umfangsrichtung erstreckende Zusatzrille miteinander verbunden sind. Jeweils etwa mittig zwischen den in Umfangsrichtung voneinander beabstandeten Quernuten verlaufen weitere Querrillen. Dadurch soll vor allem das Wasserableitvermögen des Laufstreifens in den schulterseitigen Bereichen verbessert werden. Dieser bekannte Laufstreifen ist für PKW-Sommerreifen vorgesehen, ihm fehlen daher vor allem Profilstrukturen für eine All-Season-Eignung, insbesondere eine Eignung auf Schnee.

Aus der JP 2000 142 033 A und der JP H07 276 924 A ist jeweils ein Fahrzeugluftreifen mit einem Laufstreifen mit Schulterblockreihen bekannt, welche durch eine Umfangsnut begrenzt sind, wobei in den Schulterblockreihen abwechselnd in die Umfangsrille einmündende Querrillen und weitere Querrillen verlaufen, welche nicht in die Umfangsrille münden und sich über den Laufstreifenrand hinaus erstrecken. Sämtliche Querrillen sind durch eine in Umfangsrichtung umlaufende, schmäler als die Umfangsnut ausgeführte Zusatznut miteinander verbunden. Der Reifen gemäß der JP 2000 142 033 A soll gute Traktions- und Handlingeigenschaften, der Reifen gemäß der JP H07 276 924 A soll gute Eis-, Schnee- und Nassgriffeigenschaften aufweisen.

Die DE 10 2004 042 223 A1 offenbart einen Fahrzeugluftreifen mit einem Laufstreifen mit Schulterblockreihen, in welchen Sacknuten und sich über den Laufstreifenrand hinaus erstreckende, innerhalb der Schulterblockreihe endende Schrägrillen verlaufen. Zwischen jeder Sacknut und der in Umfangsrichtung benachbarten Schrägrille verläuft jeweils ein Einschnitt. Durch diese Maßnahme soll die Schulterblockreihe eine optimierte Biegesteifigkeit aufweisen.

Der Erfindung liegt somit die Aufgabe zugrunde, einen Reifen der eingangs genannten Art derart auszuführen, das sein Laufstreifen eine besonders hohe Ausgewogenheit der für eine All-Season-Eignung erwünschten Eigenschaften aufweist, vor allem was die Laufstreifensteifigkeit betrifft, die für gute Handlingeigenschaften verantwortlich ist, ferner was das Wasserdrainagevermögen betrifft, welches für gute Aquaplaningeigenschaften sorgt, und ferner was die Fahreigenschaften auf schneeigem Untergrund betrifft. Dabei sollen im Laufstreifen Profilstrukturen, die als Schneetaschen wirken können, zur Verfügung stehen, um auf schneeigem Untergrund die sehr vorteilhafte Schnee- Schnee-Reibung zu gewährleisten, wobei die anderen erwähnten Eigenschaften nicht nachteilig beeinflusst werden sollen.

Gelöst wird die gestellte Aufgabe erfindungsgemäß dadurch, dass die in die schulterseitige Umfangsnut mündenden Quernuten eine Tiefe von 70 % bis 90 % der Profiltiefe und über ihren Verlauf ab den Mündungsbereichen in Richtung zur Laufstreifenaußenseite eine zunehmende Breite aufweisen, wobei die Zusatznuten eine Tiefe von 1,5 mm bis 2,5 mm aufweisen und eine über ihren Verlauf ab ihren Anschlussbereichen an die Quernuten abnehmende Breite aufweisen.

Bei einem erfindungsgemäß ausgeführten Laufstreifen wird durch die Grundanhebungen eine Anbindung der einzelne Blöcke der schulterseitigen Blockreihen erzielt und es wird die Steifigkeit des Laufstreifens dadurch auf eine für die Handlingeigenschaften sehr vorteilhafte Weise beeinflusst bzw. erhöht. Die Quernuten sorgen gemeinsam mit den Zusatznuten für eine optimale Ableitung von Wasser nach außen. Die in die schulterseitige Umfangsnut mündenden Quernuten sowie die Zusatznuten sind wegen ihrer über ihren Verlauf sich ändernden Breiten in der Lage, auf schneeigem Untergrund als Schneetaschen - Auffangbereiche für Schnee - zu wirken und können somit in erwünschter Weise das Entstehen der auf schneeigem Untergrund besonders vorteilhaften Schnee- Schnee-Reibung ermöglichen.

Um gute Griffeigenschaften auf schneeigem Untergrund sicherzustellen und die Wirkung der Quernuten als Schneetaschen zu optimieren, ist es vorteilhaft, wenn sich die Quernuten jeweils aus zwei unter einem stumpfen Winkel zueinander verlaufenden, vorzugsweise und im Wesentlichen gleich große Erstreckungslängen aufweisenden Quernutabschnitten zusammensetzen. Der stumpfe Winkel zwischen den Quernutabschnitten sollte vorzugsweise 130° bis 160° betragen.

Im Zusammenhang mit einer optimalen Wirkung der Quernuten als Schneetaschen ist es ferner von besonderem Vorteil, wenn die Quernuten an ihren Mündungsbereichen in die schulterseitige Umfangsnut eine Breite von 1,5 mm bis 2,5 mm aufweisen, wobei ihre Breite an ihren blockreiheninnenseitigen Enden um 1,0 mm bis 2,0 mm größer ist.

Die im Übergangsbereich zu den Zusatznuten in den Quernuten ausgebildeten Grundanhebungen erstrecken sich bevorzugt über 1,0 mm bis 2,0 mm. Diese Grundanhebungen sind daher nur lokal begrenzt ausgebildet, wobei diese Maßnahme ausreicht, um eine optimale Steifigkeit zur Unterstützung guter Handlingeigenschaften zu gewährleisten. Durch ihre nur lokale Ausdehnung wird ferner eine ungehinderte Wasserableitung von den schulterseitigen Umfangsnuten über die Quernuten, die Zusatznuten und die zu den Laufstreifenrändern verlaufenden Quernuten unterstützt.

Besonders vorteilhaft ist es, wenn sich die Zusatznuten gerade erstrecken und wenn die Zusatznuten über die Einmündungsbereiche der sich über den Laufstreifenrand hinaus erstreckenden Quernuten hinaus erstrecken. Auch diese Maßnahmen unterstützen eine gute Wasserableitung und tragen dazu bei, Aquaplaning zu verhindern.

Eine besonders günstige Wasserableitung und Wasserdurchströmung in den schulterseitigen Blockreihen wird auch dadurch unterstützt, dass die Zusatznuten an ihrem breiteren Ende eine Breite von 1,5 mm bis 2,5 mm und an ihrem schmäleren Ende eine um 0,5 mm bis 1,0 mm geringere Breite aufweisen, und ferner dadurch, dass die Zusatznuten zur Umfangsrichtung unter einem spitzen Winkel von 5° bis 10° jeweils bis in den Bereich neben der benachbarten Quernut verlaufen. Dabei weisen die Zusatznuten an ihrem Anschlussbereich zu einer Quernut einen geringeren Abstand zur schulterseitigen Umfangsnut auf als an ihrem zweiten, innerhalb der Blockreihe befindlichen Ende.

Die von den Zusatznuten Richtung Laufstreifenrand und über diesen hinaus verlaufenden Quernuten erstrecken sich innerhalb der Bodenaufstandsfläche vorzugsweise gerade und unter einem im Wesentlichen rechten Winkel zur Erstreckung der Zusatznuten. Die Tiefe dieser Quernuten beträgt bevorzugter Weise 70 % bis 80 % der Profiltiefe. Eine derartige Ausführung dieser Quernuten unterstützt die Wasserableitung über den Laufstreifenrand hinaus.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf eine Teilabwicklung eines erfindungsgemäß ausgeführten profilierten Laufstreifens,
Fig. 2 einen Schnitt entlang der Linie B-B der Fig. 1,
Fig. 3 einen Schnitt entlang der Linie C-C der Fig. 1,
Fig. 4 einen Schnitt entlang der Linie D-D der Fig. 1,
Fig. 5 einen Schnitt entlang der Linie U-U der Fig. 1,
Fig. 6 einen Schnitt entlang der Linie V-V der Fig. 1,
Fig. 7 einen Schnitt entlang der Linie E-E der Fig. 1,
Fig. 8 einen Schnitt entlang der Linie F-F der Fig. 1,
Fig. 9 einen Schnitt entlang der Linie G-G der Fig. 1 und
Fig. 10 einen Schnitt entlang der Linie K-K der Fig. 1.

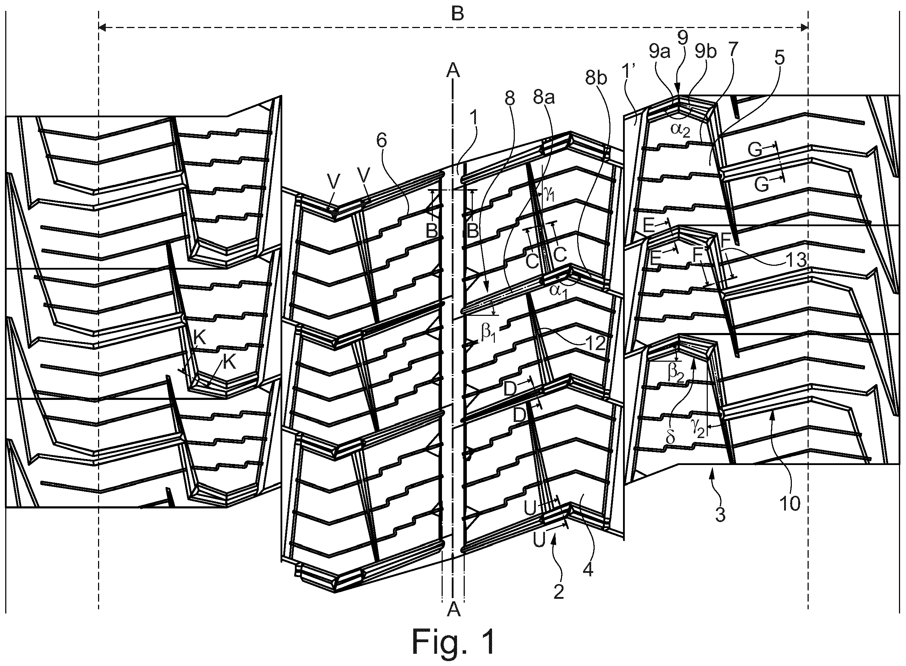

Fig. 1 zeigt einen Umfangsabschnitt eines Laufstreifens, welcher insbesondere für All-Season-Reifen für Personenkraftwagen, Vans oder Light-Trucks vorgesehen ist. Der Laufstreifen wird nachfolgend über seine Breite B im bodenberührenden Teil betrachtet, welche der Breite des statisch ermittelten Footprints gemäß E.T.R.T.O. Standards (Last bei 70 % der Tragfähigkeit bei einem Innendruck von 2,5 bar, Innendruck 85 % von 2,5 bar) entspricht. In den beiden Laufstreifenhälften befinden sich übereinstimmend gestaltete Profilstrukturen, wobei der Laufstreifen bei der gezeigten Ausführungsvariante nicht laufrichtungsgebunden ausgeführt ist und daher ohne bevorzugte Abrollrichtung am Fahrzeug montiert wird. Möglich ist jedoch auch eine laufrichtungsgebundene Ausgestaltung eines erfindungsgemäß ausgeführten Laufstreifens. In der Beschreibung und den Patentansprüchen angegebene Winkel von Nuten oder Nutabschnitten sind von den Mittellinien der Nuten oder Nutabschnitte ermittelt, Erstreckungslängen von Nuten oder Nutabschnitten sind ebenfalls entlang der Mittellinien der Nuten oder Nutabschnitte ermittelt.

Der Laufstreifen ist durch drei in Umfangsrichtung umlaufende breite Umfangsnuten 1,1' in vier im Wesentlichen gleich breite Blockreihen gegliedert, zwei mittlere Blockreihen 2 aus Blöcken 4 und zwei Schulterblockreihen 3 aus Blöcken 5. Bei der gezeigten Ausführungsform ist die die beiden mittleren Blockreihen 2 voneinander trennende Umfangsnut 1 eine gerade in Umfangsrichtung entlang des Reifenäquators A-A umlaufende Umfangsnut, die beiden jeweils eine mittlere Blockreihe 2 von einer Schulterblockreihe 3 trennenden Umfangsnuten 1' verlaufen, bedingt durch unter einem kleinen spitzen Winkel zur Umfangsrichtung orientierte Blockflanken der Blöcke 4, 5 in diesen Blockreihen 2, 3, in Draufsicht zickzackförmig.

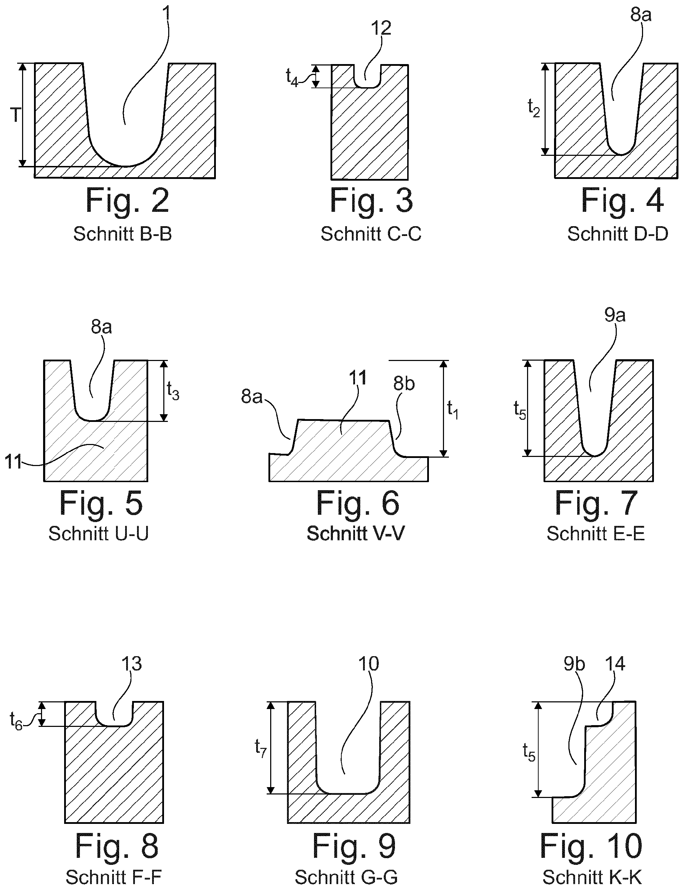

Die breiten Umfangsnuten 1,1' weisen eine Tiefe T auf, die der maximal vorgesehenen Profiltiefe von üblicherweise 7,0 mm bis 9,0 mm entspricht, wie es beispielsweise in der Schnittdarstellung der Fig. 2, welche einen Querschnitt durch die zentrale Umfangsnut 1 zeigt, dargestellt ist.

Die Blöcke 4 in den mittleren Blockreihen 2 sind in Umfangsrichtung voneinander durch Quernuten 8, die Blöcke 5 in den schulterseitigen Blockreihen sind durch Quernuten 9, 10 und eine Zusatznut 13 voneinander getrennt, wobei sämtliche Quernuten 8 bzw. 9, 10 innerhalb einer Blockreihe 2, 3 zueinander parallel verlaufen.

Die Blöcke 4 in den beiden mittleren Blockreihen 2 und die Blöcke 5 in Schulterblockreihen 3 sind jeweils mit einer Anzahl von in Draufsicht zumindest abschnittsweise gerade oder zumindest abschnittsweise zickzackförmig verlaufenden Einschnitten 6, 7 versehen. Die Einschnitte 6, 7 können die übliche Breite von 0,4 mm bis 0,6 mm aufweisen, ihre Erstreckungsrichtung entspricht zumindest im Wesentlichen der Erstreckungsrichtung der Quernuten 8 bzw. der Quernuten 9, 10.

Die Besonderheiten der Ausgestaltung der mittleren Blockreihen 2 wird nun anhand einer der beiden Blockreihen 2 näher erläutert. Jede die Blöcke 4 voneinander trennende Quernut 8 setzt sich in Draufsicht aus zwei Quernutabschnitten 8a, 8b zusammen, wobei der eine Quernutabschnitt 8a in die zentrale Umfangsnut 1 mündet, der zweite Quernutabschnitt 8b in die schulterseitig verlaufende Umfangsnut 1'. Die beiden Quernutabschnitte 8a, 8b schließen miteinander einen stumpfen Winkel α₁ ein, welcher 130° bis 150° beträgt. Gegenüber der axialen Richtung verläuft der Quernutabschnitt 8a unter einem spitzen Winkel β₁, welcher 5° bis 25° beträgt. Der Quernutabschnitt 8b ist kürzer als der Quernutabschnitt 8a und erstreckt sich über 15 % bis 30 % der Erstreckungslänge der Quernut 8. In Draufsicht betrachtet verbreitert sich die Quernut 8 kontinuierlich zwischen der zentralen Umfangsnut 1 und der schulterseitigen Umfangsnut 1', wobei ihre Breite an der Laufstreifenaußenfläche im Mündungsbereich zur zentralen Umfangsnut 1 1,5 mm bis 2,5 mm beträgt und ihre Breite im Bereich ihres Mündungsbereiches zur schulterseitigen Umfangsnut 1 um 0,5 mm bis 1,5 mm größer ist.

Der Quernutabschnitt 8b weist eine insbesondere konstante Tiefe t₁ (Fig. 6) von 70 % bis 90 % der Profiltiefe T auf Wie ferner die Schnittdarstellung in Fig. 6 zeigt, ist im Quernutabschnitt 8a unmittelbar an den Quernutabschnitt 8b bzw. die Knickstelle zwischen den Quernutabschnitten 8a, 8b anschließend der Nutgrund angehoben, die derart gebildete Grundanhebung 11 erstreckt sich über 15 % bis 50 % der Erstreckungslänge des Quernutabschnittes 8a. In jenem Teil des Quernutabschnittes 8a, welcher außerhalb der Grundanhebung 11 verläuft, weist der Quernutabschnitt 8a eine insbesondere konstante Tiefe t₂ (Fig. 4) von 70% bis 90 % der Profiltiefe T auf. Im Bereich der Grundanhebung 11 beträgt die verbleibende Tiefe t₃ (Fig. 5, Fig. 6) 40 % bis 60 % der Profiltiefe T. Im Bereich der Grundanhebung 11 sind daher die in Umfangsrichtung benachbarten Blöcke 4 stärker aneinander angebunden, als in den sonstigen Bereichen des Verlaufes der Quernut 8.

Zwischen den in Umfangsrichtung benachbarten Quernutabschnitten 8a verläuft jeweils eine Zusatznut 12, die in den einen Quernutabschnitt 8a im Bereich der Grundanhebung 11 und in den anderen Quernutabschnitt 8a außerhalb der Grundanhebung 11 mündet. Die Zusatznuten 12 erstrecken sich zur Umfangsrichtung unter einem spitzen Winkel γ₁ von 3° bis 15°, vorzugsweise beträgt γ₁ mindestens 5°. Die Neigung der Zusatznuten 12 ist derart, dass ihr Abstand zur zentralen Umfangsnut 1 an ihren im Bereich der Grundanhebung 11 mündenden Enden größer ist als an ihren zweiten Enden. Die Zusatznuten 12 teilen die Blöcke 4 in im Wesentlichen gleich große Blockteile und weisen in Draufsicht einen trichterförmigen Verlauf mit kontinuierlich zunehmender Breite auf, derart, dass sie an jenem Ende, welches sich im Bereich der Grundanhebung 11 des einen Quernutabschnittes 8a befindet, ihre größere Breite von 1,5 mm bis 2,5 mm aufweisen Die Breite der Zusatznuten 12 nimmt kontinuierlich über ihre Erstreckung in Richtung des benachbarten Quernutabschnittes 8a ab, die Breite der Zusatznuten 12 an diesem Ende beträgt 0,5 mm bis 1,0 mm beträgt. Die Zusatznuten 12 weisen über ihre Erstreckung eine vorzugsweise konstante Tiefe t₄ (Fig. 3) auf, die 1,5 mm bis 2,5 mm, vorzugsweise 2 mm, beträgt.

Die in den Blöcken 5 der Schulterblockreihen 3 ausgebildeten Quernuten 9, 10 erstrecken sich in axialer Richtung jeweils etwa bis zur Mitte der Blöcke 5, die Quernuten 9 von den Umfangsnuten 1' ausgehend, die Quernuten 10 vom jeweiligen Laufstreifenrand betrachtet. Jede Quernut 9 weist über ihren Verlauf eine kontinuierlich zunehmende Breite auf, wobei ihre Breite im Mündungsbereich zur schulterseitigen Umfangsnut 1' 1,5 mm bis 2,5 mm beträgt, ihre Breite an ihren innerhalb der Blockreihe 3 befindlichen Enden ist um 1 mm bis 2 mm größer. Die Quernut 9 setzt sich aus zwei im Wesentlichen gleich große Erstreckungslängen aufweisenden Quernutabschnitten 9a, 9b zusammen, die miteinander einen stumpfen Winkel α2 einschließen, welcher 130° bis 160° beträgt, wobei der Quernutabschnitt 9a zur axialen Richtung unter einem spitzen Winkel β₂ von 5° bis 10° verläuft. Wie die Schnittdarstellungen in Fig. 7 und auch in Fig. 10 zeigen, weist die Quernut 9 über den Großteil ihrer Erstreckung eine vorzugsweise konstante Tiefe t₅ von 70 % bis 90 % der Profiltiefe T auf.

Am blockinneren Ende jeder Quernut 9 schließt jeweils die Zusatznut 13 an, welche zur Umfangsrichtung unter einem spitzen Winkel γ₂ von 5° bis 10° bis in den Bereich neben der benachbarten Quernut 9 verläuft, wobei die Zusatznuten 13 derart geneigt sind, dass sie an ihrem an die Quernut 9 anschließenden Ende einen geringeren Abstand zur Umfangsnut 1' aufweisen als an ihrem zweiten, innerhalb der Blockreihe 3 befindlichen Ende. Die zueinander parallel verlaufenden Zusatznuten 13 weisen somit eine Erstreckungslänge auf, die im Wesentlichen der Erstreckungslänge der Blöcke 5 in Umfangsrichtung entspricht. Etwa im Bereich der Mitte jeder Zusatznut 13 mündet jeweils eine der Quernuten 10, die sich jeweils über den Laufstreifenrand hinaus fortsetzen, ein.

Wie die Schnittdarstellung in Fig. 8 zeigt, weist die Zusatznut 13 eine über ihren Verlauf insbesondere konstante Tiefe t₆ von 1,5 mm bis 2,5 mm, insbesondere 2,0 mm, auf. Die Zusatznuten 13 sind in Draufsicht trichterförmig gestaltet, ihre Breite nimmt daher beginnend von ihrem Anschlussbereich bzw. der Knickstelle zur Quernut 9 bis zu ihren zweiten Enden innerhalb der Blöcke 5 kontinuierlich ab, wobei sie an diesen Enden keine nennenswerte Breite bzw. ein Breite von bis zu 0,5 mm aufweisen.

Den Übergangsbereich zwischen der tieferen Quernut 9 und der wesentlich seichteren Zusatznut 13 zeigt die Schnittdarstellung in Fig. 10. Über eine Erstreckungslänge von 1,0 mm bis 2,0 mm befindet sich im Endabschnitt der Quernut 9 eine Grundanhebung 14, welche die geringe Tiefe t₆ der Zusatznut 13 aufweist. Die Grundanhebungen 14 versteifen die Schulterblockreihen, wirken sich somit besonders vorteilhaft auf die Handlingeigenschaften aus und unterstützen einen gleichmäßigen Abrieb.

Die Quernuten 10, die sich jeweils über den Laufstreifenrand hinaus fortsetzen, verlaufen innerhalb der Bodenaufstandsflächenbreite gerade und unter einem im Wesentlichen rechten Winkel zur Erstreckung der Zusatznuten 13. Gemäß der Schnittdarstellung in Fig. 9 weist die Quernut 10 eine Tiefe t₇ auf, welche 70 % bis 80 % der Profiltiefe T entspricht. Die Breite der Quernuten 10, welche in Richtung zum Laufstreifenrand kontinuierlich größer wird, beträgt 2,5 mm bis 3,5 mm.

Sämtliche Nuten - Umfangsnuten 1, Quernuten 8, 9, 10 und Zusatznuten 12, 13 - sind mit Nutflanken versehen, die unter einem Winkel von 1° bis 6° zur radialen Richtung verlaufen, wobei sich der Querschnitt dieser Nuten nach außen etwas öffnet. Insbesondere die Zusatznuten 12, 13 und die Quernut 10 weisen bevorzugt Nutflanken auf, die sich nahezu in radialer Richtung erstrecken, der diesbezügliche Winkel beträgt daher in der Größenordnung von 1°.

### Bezugsziffernliste

- 1, 1' ......................: Umfangsnut
- 2 ...........................: mittlere Blockreihe
- 3 ...........................: Schulterblockreihe
- 4 ...........................: Block
- 5 ...........................: Block
- 6 ...........................: Einschnitt
- 7 ...........................: Einschnitt
- 8 ...........................: Quernut
- 8a, 8b....................: Quernutabschnitt
- 9 ...........................: Quernut
- 9a, 9b ....................: Quernutabschnitt
- 10 .........................: Quernut
- 11 .........................: Grundanhebung
- 12 .........................: Zusatznut
- 13 .........................: Zusatznut
- 14 .........................: Grundanhebung
- α₁, α₂, β₁, β₂, γ₁, γ₂.: Winkel
- B ...........................: Breite
- T ...........................: Tiefe
- t₁, t₂, t₃, t₄, t₅, t₆, t₇.: Tiefe

## Patentansprüche

1. Fahrzeugluftreifen mit einem profilierten Laufstreifen, welcher durch eine auf maximale Profiltiefe (T) ausgeführte, zentrale Umfangsnut (1) und durch zwei ebenfalls auf maximale Profiltiefe (T) ausgeführte schulterseitige Umfangsnuten (1') in zwei Schulterblockreihen (3) und zwei mittlere Blockreihen (2) gegliedert ist, wobei die Schulterblockreihen (3) in Blöcke (5) gegliedert sind, wobei in Umfangsrichtung aufeinanderfolgende Blöcke (5) durch zwei in Umfangsrichtung voneinander beabstandete Quernuten (9, 10) und eine diese verbindende sich etwa mittig in der Blockreihe (3) in Umfangsrichtung erstreckende Zusatznut (13) voneinander getrennt sind, wobei jeweils die eine Quernut (9) in die schulterseitige Umfangsnut (1') mündet und die andere von der Zusatznut (13) ausgehend sich über den Laufstreifenrand hinaus erstreckt, wobei die Zusatznuten (13) jeweils am blockreiheninnenseitigen Ende der in die schulterseitige Umfangsnut (1') mündenden Quernuten (9) anschließen und wobei an den blockreiheninnenseitigen Endabschnitten dieser Quernuten (9) jeweils eine Grundanhebung (14) ausgebildet ist, welche ein Tiefe (t₆) aufweist, die der Tiefe (t₆) der Zusatznuten (13) entspricht,
**dadurch gekennzeichnet,**
**dass** die in die schulterseitige Umfangsnut (1') mündenden Quernuten (9) eine Tiefe (t₅) von 70 % bis 90 % der Profiltiefe (T) und über ihren Verlauf ab den Mündungsbereichen in Richtung zur Laufstreifenaußenseite eine zunehmende Breite aufweisen, wobei die Zusatznuten (13) eine Tiefe (t₆) von 1,5 mm bis 2,5 mm aufweisen und eine über ihren Verlauf ab ihren Anschlussbereichen an die Quernuten (9) abnehmende Breite aufweisen.

2. Fahrzeugluftreifen nach Anspruch 1, **dadurch gekennzeichnet, dass** sich die Quernuten (9) jeweils aus zwei unter einem stumpfen Winkel (α₂) zueinander verlaufenden, vorzugsweise und im Wesentlichen gleich große Erstreckungslängen aufweisenden Quernutabschnitten (9a, 9b) zusammensetzen.

3. Fahrzeugluftreifen nach Anspruch 1 oder 2, **dadurch gekennzeichnet, dass** der stumpfe Winkel (α₂) zwischen den Quernutabschnitten (9a, 9b) 130° bis 160° beträgt.

4. Fahrzeugluftreifen nach Anspruch 1 oder 2, **dadurch gekennzeichnet, dass** die in die schulterseitige Umfangsnut (1') mündenden Quernuten (9) an ihren Mündungsbereichen ein Breite von 1,5 mm bis 2, 5 mm aufweisen, wobei ihre Breite an ihren blockreiheninnenseitigen Enden um 1,0 mm bis 2, 0 mm größer ist.

5. Fahrzeugluftreifen nach Anspruch 1, **dadurch gekennzeichnet, dass** sich die Grundanhebungen (14) über 1,0 mm bis 2,0 mm erstrecken.

6. Fahrzeugluftreifen nach Anspruch 1, **dadurch gekennzeichnet, dass** sich die Zusatznuten (13) gerade erstrecken.

7. Fahrzeugluftreifen nach Anspruch 1 oder 6, **dadurch gekennzeichnet, dass** die Zusatznuten (13) über die Einmündungsbereiche der sich über den Laufstreifenrand hinaus erstreckenden Quernuten (10) hinaus verlaufen.

8. Fahrzeugluftreifen nach einem der Ansprüche 1, 6 oder 7, **dadurch gekennzeichnet, dass** die Zusatznuten (13) an ihrem breiteren Ende eine Breite von 1,5 mm bis 2,5 mm und an ihrem schmäleren Ende eine um 0,5 mm bis 1,0 mm geringere Breite aufweisen.

9. Fahrzeugluftreifen nach einem der Ansprüche 1 oder 6 bis 8, **dadurch gekennzeichnet, dass** die Zusatznuten (13) zur Umfangsrichtung unter einem spitzen Winkel (γ₂) von 5° bis 10° jeweils bis in den Bereich neben der benachbarten Quernut (9) verlaufen, wobei die Zusatznuten (13) an ihrem an eine Quernut (9) anschließenden Ende einen geringeren Abstand zur Umfangsnut (1') aufweisen als an ihrem zweiten, innerhalb des Blockes (5) befindlichen Ende.

10. Fahrzeugluftreifen nach Anspruch 1, **dadurch gekennzeichnet, dass** die Quernuten (10), die sich jeweils über den Laufstreifenrand hinaus fortsetzen, innerhalb der Bodenaufstandsflächenbreite gerade und unter einem im Wesentlichen rechten Winkel zur Erstreckung der Zusatznuten (13) verlaufen.

11. Fahrzeugluftreifen nach Anspruch 1 oder 10, **dadurch gekennzeichnet, dass** die Quernuten (10), die sich jeweils über den Laufstreifenrand hinaus fortsetzen, eine Tiefe (t₇) aufweisen, welche 70 % bis 80 % der Profiltiefe (T) beträgt.

## Claims

1. Pneumatic vehicle tyre with a profiled tread, which is divided by a central circumferential groove (1) that is made to the maximum profile depth (T) and by two shoulder-side circumferential grooves (1') that are likewise made to the maximum profile depth (T) into two rows of shoulder blocks (3) and two middle rows of blocks (2), wherein the rows of shoulder blocks (3) are divided into blocks (5), wherein successive blocks (5) in the circumferential direction are separated from one another by two transverse grooves (9, 10) that are spaced apart from one another in the circumferential direction and an additional groove (13) that connects these transverse grooves and extends in the circumferential direction approximately in the middle of the row of blocks (3), wherein the one transverse groove (9) in each case merges into the shoulder-side circumferential groove (1') and the other extends from the additional groove (13) over the edge of the tread, wherein the additional grooves (13) in each case adjoin the end on the inner side of the row of blocks of the transverse grooves (9) merging into the shoulder-side circumferential groove (1') and wherein a base elevation (14), which has a depth (t₆) that corresponds to the depth (t₆) of the additional grooves (13), is in each case formed at the end portions on the inner side of the row of blocks of these transverse grooves (9),
**characterized**
**in that** the transverse grooves (9) merging into the shoulder-side circumferential groove (1') have a depth (t5) of 70% to 90% of the profile depth (T) and have a width that increases over their course from the merging regions in the direction of the outer side of the tread, wherein the additional grooves (13) have a depth (t₆) of 1.5 mm to 2.5 mm and a width that decreases over their course from their adjoining regions with the transverse grooves (9).

2. Pneumatic vehicle tyre according to Claim 1, **characterized in that** the transverse grooves (9) are in each case made up of two transverse groove portions (9a, 9b) running at an obtuse angle (α₂) in relation to one another and preferably and substantially having the same lengths of extent.

3. Pneumatic vehicle tyre according to Claim 1 or 2, **characterized in that** the obtuse angle (α₂) between the transverse groove portions (9a, 9b) is 130° to 160°.

4. Pneumatic vehicle tyre according to Claim 1 or 2, **characterized in that** the transverse grooves (9) merging into the shoulder-side circumferential groove (1') have at their merging regions a width of 1.5 mm to 2.5 mm, wherein their width at their ends on the inner side of the row of blocks is greater by 1.0 mm to 2.0 mm.

5. Pneumatic vehicle tyre according to Claim 1, **characterized in that** the base elevations (14) extend over 1.0 mm to 2.0 mm.

6. Pneumatic vehicle tyre according to Claim 1, **characterized in that** the additional grooves (13) extend in a straight line.

7. Pneumatic vehicle tyre according to Claim 1 or 6, **characterized in that** the additional grooves (13) run beyond the merging regions of the transverse grooves (10) extending over the edge of the tread.

8. Pneumatic vehicle tyre according to one of Claims 1, 6 or 7, **characterized in that** the additional grooves (13) have at their wider end a width of 1.5 mm to 2.5 mm and at their narrower end a width that is smaller by 0.5 mm to 1.0 mm.

9. Pneumatic vehicle tyre according to one of Claims 1 or 6 to 8, **characterized in that** the additional grooves (13) in each case run into the region alongside the neighbouring transverse groove (9) at an acute angle (γ₂) to the circumferential direction of 5° to 10°, wherein the additional grooves (13) have a smaller distance from the circumferential groove (1') at their end that adjoins a transverse groove (9) than at their second end that is located within the block (5).

10. Pneumatic vehicle tyre according to Claim 1, **characterized in that** the transverse grooves (10) which in each case continue beyond the edge of the tread run in a straight line and at substantially a right angle to the extent of the additional grooves (13) within the width of the ground contact area.

11. Pneumatic vehicle tyre according to Claim 1 or 10, **characterized in that** the transverse grooves (10) which in each case continue beyond the edge of the tread have a depth (t₇) which is 70% to 80% of the profile depth (T).

## Revendications

1. Pneumatique de véhicule comprenant une bande de roulement profilée qui est divisée, par une rainure périphérique centrale (1) réalisée sur la profondeur maximale du profil (T) et par deux rainures périphériques du côté de l'épaulement (1'), également réalisées sur la profondeur maximale du profil (T), en deux rangées de blocs d'épaulement (3) et deux rangées de blocs centrales (2), les rangées de blocs d'épaulement (3) étant divisées en blocs (5), des blocs (5) successifs dans la direction périphérique étant séparés les uns des autres par deux rainures transversales (9, 10) espacées l'une de l'autre dans la direction périphérique et par une rainure supplémentaire (13) reliant celles-ci, s'étendant approximativement centralement dans la direction périphérique dans la rangée de blocs (3), à chaque fois l'une des rainures transversales (9) débouchant dans la rainure périphérique du côté de l'épaulement (1') et l'autre s'étendant au-delà du bord de la bande de roulement à partir de la rainure supplémentaire (13), les rainures supplémentaires (13) se raccordant à chaque fois à l'extrémité, du côté intérieur de la rangée de blocs, des rainures transversales (9) débouchant dans la rainure périphérique du côté de l'épaulement (1') et, au niveau des portions d'extrémité, du côté intérieur de la rangée de blocs, de ces rainures transversales (9), étant à chaque fois réalisé un rehaussement de base (14) qui présente une profondeur (t₆) qui correspond à la profondeur (t₆) des rainures supplémentaires (13),
**caractérisé en ce que**
les rainures transversales (9) débouchant dans la rainure périphérique du côté de l'épaulement (1') présentent une profondeur (t₅) de 70 % à 90 % de la profondeur du profil (T) et présentent une largeur croissante sur leur étendue à partir des régions d'embouchure dans la direction du côté extérieur de la bande de roulement, les rainures supplémentaires (13) présentant une profondeur (t₆) de 1,5 mm à 2,5 mm et présentant une largeur diminuant sur leur étendue à partir de leurs régions de raccordement aux rainures transversales (9) .

2. Pneumatique de véhicule selon la revendication 1, **caractérisé en ce que** les rainures transversales (9) se composent à chaque fois de deux portions de rainures transversales (9a, 9b) s'étendant l'une par rapport à l'autre suivant un angle obtus (α₂) présentant de préférence des longueurs d'étendue essentiellement identiques.

3. Pneumatique de véhicule selon la revendication 1 ou 2, **caractérisé en ce que** l'angle obtus (α₂) entre les portions de rainures transversales (9a, 9b) est compris entre 130° et 160°.

4. Pneumatique de véhicule selon la revendication 1 ou 2, **caractérisé en ce que** les rainures transversales (9) débouchant dans la rainure périphérique du côté de l'épaulement (1') présentent, au niveau de leurs régions d'embouchure, une largeur de 1,5 mm à 2,5 mm, leur largeur étant supérieure de 1,0 mm à 2,0 mm au niveau de leurs extrémités du côté intérieur de la rangée de blocs.

5. Pneumatique de véhicule selon la revendication 1, **caractérisé en ce que** les rehaussements de base (14) s'étendent sur 1,0 mm à 2,0 mm.

6. Pneumatique de véhicule selon la revendication 1, **caractérisé en ce que** les rainures supplémentaires (13) s'étendent en ligne droite.

7. Pneumatique de véhicule selon la revendication 1 ou 6, **caractérisé en ce que** les rainures supplémentaires (13) s'étendent au-delà des régions d'embouchure des rainures transversales (10) s'étendant au-delà du bord de la bande de roulement.

8. Pneumatique de véhicule selon l'une quelconque des revendications 1, 6 ou 7, **caractérisé en ce que** les rainures supplémentaires (13) présentent, au niveau de leur extrémité plus large, une largeur de 1,5 mm à 2,5 mm et au niveau de leur extrémité plus étroite, une largeur plus étroite de 0,5 mm à 1,0 mm.

9. Pneumatique de véhicule selon l'une quelconque des revendications 1 ou 6 à 8, **caractérisé en ce que** les rainures supplémentaires (13) s'étendent par rapport à la direction périphérique suivant un angle aigu (γ₂) de 5° à 10° à chaque fois jusque dans la région à côté de la rainure transversale adjacente (9), les rainures supplémentaires (13) présentant au niveau de leur extrémité se raccordant à une rainure transversale (9), une plus petite distance à la rainure périphérique (1'), qu'au niveau de leur deuxième extrémité se trouvant à l'intérieur du bloc (5).

10. Pneumatique de véhicule selon la revendication 1, **caractérisé en ce que** les rainures transversales (10) qui se prolongent à chaque fois au-delà du bord de la bande de roulement s'étendent en ligne droite à l'intérieur de la largeur de la surface d'appui au sol et suivant un angle essentiellement droit par rapport à l'étendue des rainures supplémentaires (13).

11. Pneumatique de véhicule selon la revendication 1 ou 10, **caractérisé en ce que** les rainures transversales (10) qui se prolongent à chaque fois au-delà du bord de la bande de roulement présentent une profondeur (t₇) qui vaut 70 % à 80 % de la profondeur du profil (T).
